# EUROPEAN PATENT APPLICATION

(11) **EP 4 201 230 A1**
(43) Date of publication of application: **28.06.2023**
(21) Application number: 22813873.1
(22) Date of filing: 14.10.2022
(51) Int. Cl.: A24D 3/04, A24D 3/02, A24B 13/02, H05B 6/10, A24B 15/12, A24B 3/14, A24D 3/06, A24D 3/17, A24D 1/02

(54) **TOBACCO ROD, AEROSOL-GENERATING ARTICLE COMPRISING SAME, AND AEROSOL-GENERATING DEVICE USED WITH SAME**

(30) Priority: 28.10.2021 KR 20210145622
(71) Applicant: KT & G Corporation, Daejeon 34337 (KR)
(72) Inventor: PARK, In Su, Daejeon 34128 (KR); KWON, Chan Min, Daejeon 34128 (KR)
(74) Representative: Ter Meer Steinmeister & Partner
(86) International application number: PCT/KR2022/015564
(87) International publication number: WO 2023/075233

(57) **Abstract**

Provided are a tobacco rod, an aerosol generating article including the same, and an aerosol generating apparatus used therewith. The tobacco rod includes: a first filter segment; a second filter segment that is located upstream of the first filter segment; and a cavity segment that is formed by the first filter segment and the second filter segment, in which the cavity segment is filled with a tobacco granule, and the tobacco granule includes tobacco fine particles, and susceptor fine particles heated by a variable magnetic field therein.

## Description

### [Technical Field]

The present invention relates to a tobacco rod, an aerosol generating article including the same, and an aerosol generating apparatus used therewith. More particularly, the present invention relates to a tobacco rod including a specific form in which a susceptor is present inside tobacco granules, an aerosol generating article including the same, and an aerosol generating apparatus used therewith.

This application claims the benefit of priority based on Korean Patent Application No. 10-2021-0145622 filed on October 28, 2021, the entire contents of which are incorporated as a part of the present specification by reference.

### [Background Art]

In recent years, there has been a growing demand for alternative smoking articles that overcome the disadvantages of traditional cigarettes. For example, there is an increasing demand for an apparatus (e.g. cigarette-style electronic cigarette) that generates aerosols by electrically heating a cigarette stick. Accordingly, research on an electrically heated aerosol generating apparatus and a cigarette stick (or aerosol generating article) applied thereto is being actively conducted.

A planar leaf has been mainly used as a tobacco substance in the cigarette stick used in the electrically heated aerosol generating apparatus, and recently, a method of using granular tobacco substance instead of the planar leaf has been proposed. For example, a method of applying a granular tobacco to a cartridge and a method of applying a granular tobacco to a stick have been proposed.

When the granular tobacco substance is applied to the stick, a method of preparing the granular tobacco substance by filling granules in an empty space of a cavity filter included in the stick is used. When heating the stick, it is preferable to heat only the cavity filter in order to increase impregnation of a moisturizing agent that causes atomization in other filter parts or to reduce atomization and prevent deformation of an adhesive included in the filter part and change in physical properties of the filter part. There is a method of using a contact heater or a non-contact heater as a method of heating the cavity filter. Structurally, a rod need-shaped heater, a blade-shaped heater, and a cylindrical contact heater have been pointed out as disadvantages in that it is difficult to uniformly heat tobacco granules, and carbonization easily occurs on a contact surface to negatively affect a taste of tobacco.

In recent years, as a method of uniformly heating granules using a non-contact heater instead of a contact heater and expressing a unique taste of tobacco without a carbonization phenomenon, a method of applying a susceptor that generates heat through an induction heating method has been proposed.

However, since the effect of uniformly heating the entire tobacco granules may vary depending on how the susceptor is mixed with the tobacco granules, there is a need for research and development on a method of mixing the susceptor with the tobacco granules in the cavity filter and heating the susceptor

### [Prior Art Document]

### [Patent Document]

(Patent Document 1) Korea Patent Laid-open Publication No. 10-2021-0064306

### [Disclosure]

### [Technical Problem]

The present inventors provide a tobacco rod capable of expressing a unique taste of tobacco without carbonization by uniformly heating the entire granule without the carbonization through a specific form in which a susceptor exists inside tobacco granules present in a cavity filter of the tobacco rod, an aerosol generating article including the same, and an aerosol generating apparatus used therewith.

### [Technical Solution]

According to a first aspect of the present invention, a tobacco rod includes: a first filter segment; a second filter segment that is located upstream of the first filter segment; and a cavity segment that is formed by the first filter segment and the second filter segment, in which the cavity segment is filled with a tobacco granule, and the tobacco granule includes tobacco fine particles, and susceptor fine particles heated by a variable magnetic field therein.

In an embodiment of the present invention, the tobacco granule may be in a form of a core-shell in which the susceptor fine particles are aggregated and located in a core which is an inner center thereof and the tobacco fine particles are aggregated and located in a form of a shell surrounding the core.

In an embodiment of the present invention, the tobacco granule may have a form in which the tobacco fine particles and the susceptor fine particles are randomly mixed and aggregated.

In an embodiment of the present invention, the tobacco granule may further include moisture.

In an embodiment of the present invention, the tobacco granule may include: 50 to 70 wt% of tobacco fine particles; 20 to 40 wt% of susceptor fine particles; and 5 to 15 wt% of moisture based on the total weight of the tobacco granules.

In an embodiment of the present invention, the cavity segment may include a composite granule structure in which two or more of the tobacco granules are aggregated.

In an embodiment of the present invention, the composite granule structure may be a single-layer structure in which the tobacco granules are aggregated in a single-layer form; or a multi-layer structure in which two or more layers are layered.

In an embodiment of the present invention, the first filter segment and the second filter segment may each include a paper material.

In an embodiment of the present invention, the susceptor fine particles may include one selected from the group consisting of aluminum, gold, iron, nickel, cobalt, conductive carbon, graphite, mild steel, stainless steel, copper, bronze, and a combination thereof.

According to a second aspect of the present invention,
an aerosol generating article used with an aerosol generating apparatus includes: the tobacco rod; and a filter rod that is located downstream of the tobacco rod, in which the filter rod includes a cooling segment; and a mouthpiece segment that is located downstream of the cooling segment.

According to a third aspect of the present invention, an aerosol generating apparatus includes: the aerosol generating article; an accommodation space for the aerosol generating article; a battery; and a coil, wherein the coil surrounds the cavity segment and generates a variable magnetic field by receiving power from the battery to heat the susceptor.

### [Advantageous Effects]

According to a tobacco rod, an aerosol generating article including the same, and an aerosol generating apparatus used together therewith according to the present invention, it is possible to minimize a carbonization phenomenon and express a unique taste of tobacco by easily transferring heat from a susceptor generating heat to tobacco granules and uniformly heating the tobacco granules through a specific structure in which the susceptor is located inside the tobacco granules present in a cavity filter.

### [Description of Drawings]

FIG. 1 is a diagram schematically illustrating an aerosol generating apparatus according to an embodiment of the present invention.
FIG. 2 is an exemplary diagram schematically illustrating an aerosol generating article according to an embodiment of the present invention.
FIG. 3 is an exemplary diagram schematically illustrating tobacco granules having a core-shell form in an embodiment of the present invention.
FIG. 4 is a diagram schematically illustrating tobacco granules having a randomly mixed form of tobacco fine particles and susceptor fine particles in an embodiment of the present invention.

### [Best Mode]

Hereinafter, the present invention will be described in more detail.

The terms and words as used herein are not to be construed as being limited to general or dictionary meanings, and are to be construed as meaning and concepts meeting the technical idea of the present invention based on a principle that the present inventors may appropriately define the concepts of terms in order to describe their own inventions in the best manner.

The terms as used herein are used only in order to describe specific embodiments rather than limiting the present invention. Singular forms include plural forms unless the context clearly indicates otherwise. It is to be understood that the terms `include' or 'have' as used herein specify the presence of features, numerals, steps, operations, components, parts mentioned in the present specification, or combinations thereof, and do not preclude the presence or addition of one or more other features, numerals, steps, operations, components, parts, or combinations thereof.

The terms "front" and "back" as used herein are defined based on an aerosol flow.

The term "aerosol forming agent" as used herein may refer to a material capable of facilitating the formation of visible smoke and/or aerosol. Examples of the aerosol forming agent include, but are not limited to, glycerin (GLY), propylene glycol (PG), ethylene glycol, dipropylene glycol, diethylene glycol, triethylene glycol, tetraethylene glycol, and oleyl alcohol. In the art, the aerosol forming agent may be used interchangeably with the terms such as a moisturizer and a humectant.

The term "aerosol forming substrate" as used herein may refer to a material capable of forming an aerosol. The aerosol may include volatile compounds. The aerosol forming substrate may be solid or liquid. For example, the solid aerosol forming substrate may include a solid material based on tobacco raw materials such as planar leaf tobacco, cut filler, and reconstituted tobacco, and the liquid aerosol forming substrate may include liquid compositions based on nicotine, tobacco extracts, and/or various flavoring agents. However, the scope of the present disclosure is not necessarily limited thereto. The aerosol forming substrate may further include an aerosol forming agent in order to stably form visible smoke and/or aerosol.

The term "aerosol generating apparatus" as used herein may refer to an apparatus capable of generating an aerosol using an aerosol generating article in order to generate an aerosol that may be directly inhaled into a user's lung through a user's mouth.

The term "aerosol generating article" as used herein may refer to an article capable of generating an aerosol. The aerosol generating article may include an aerosol forming substrate. A representative example of the aerosol generating article may be a cigarette, but the scope of the present disclosure is not limited thereto.

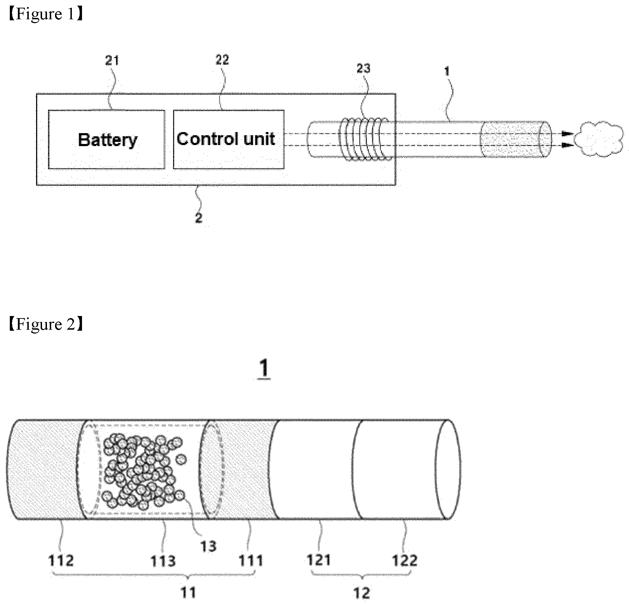

The terms "upstream" or "upstream direction" as used herein may refer to a direction that becomes distant from a user's (smoker's) mouth, and the terms ""downstream" or "downstream direction" as used herein are terms refer to a direction that becomes close to the user's (smoker's) mouth. The terms "upstream" and "downstream" are terms used to describe relative positions of elements constituting the aerosol generating article. For example, in an aerosol generating article 1 illustrated in FIG. 2, a tobacco rod 11 is located upstream or in an upstream direction of a filter rod 12, and the filter rod 12 is located downstream or in a downstream direction of the tobacco rod 11.

The term "longitudinal direction" as used herein may refer to a direction corresponding to a longitudinal axis of the aerosol generating article.

Hereinafter, embodiments of the present invention will be described in detail with reference to the accompanying drawings so that those skilled in the art to which the present invention pertains may easily practice the present invention. However, the present invention may be implemented in various different forms, and is not limited to embodiments described herein.

Hereinafter, embodiments of the present invention will be described in detail with reference to the drawings.

Since the conventional aerosol forming article and apparatus using a tobacco rod including tobacco granules have a high temperature on a contact surface but is difficult to heat to an appropriate temperature on a non-contact surface when using a contact heater, the aerosol forming article and apparatus, locally causes a carbonization phenomenon due to different heating temperatures, which causes a problem in that the unique taste of tobacco may not be expressed.

Accordingly, in order to solve the above problems, the present inventors have come to invent a tobacco rod that uses a non-contact induction type heater and a susceptor, but allows the susceptor to separately generate heat through a specific shape in which the susceptor is located inside tobacco granules to uniformly heat the entire tobacco granules, thereby allowing smokers to feel satisfaction through the unique taste of tobacco while preventing the carbonization phenomenon, an aerosol generating article including the same, and an aerosol generating apparatus used together.

In an embodiment of the present invention, as illustrated in FIG. 2, the tobacco rod 11 includes: a first filter segment 111; a second filter segment 112 located upstream of the first filter segment 111; and a cavity segment 113 formed by the first filter segment 111 and the second filter segment 112, in which the cavity segment 113 is filled with tobacco granules, and the tobacco granule includes fine particles therein; and a susceptor heated by a variable magnetic field.

In one embodiment of the present invention as illustrated in FIG. 2, the tobacco rod 11 includes the first filter segment 111; the second filter segment 112 located upstream of the first filter segment 111; and the cavity segment 113 formed by the first filter segment 111 and the second filter segment 112. The tobacco rod 11 is a tobacco rod including a cavity or the cavity segment 212, and may supply tobacco components (or smoking flavor components) such as nicotine as it is heated. The cavity segment 113 may be filled with the tobacco granules, that is, a granular tobacco substance.

Specifically, the first filter segment 111 may perform functions of forming the cavity segment 113, filtering and cooling an aerosol, and may be located downstream of the cavity segment 113. The second filter segment 112 may perform a function of forming the cavity segment 113 and preventing the tobacco granules from falling off. In addition, the second filter segment 112 may allow the cavity segment 113 to be disposed at an appropriate position within the aerosol generating apparatus 2 when the aerosol generating article 1 is inserted into the aerosol generating apparatus 2, and may prevent the tobacco rod 11 from escaping to the outside and prevent a liquefied aerosol from flowing from the tobacco rod 11 into the aerosol generating apparatus 2 during smoking.

In an embodiment of the present invention, a suction resistance of the first filter segment 111 or the second filter segment 112 may be 50mmH₂O/60mm or more, 75mmH₂O/60mm or more, 90mmH₂O/60mm or more, 105mmH₂O/60mm or more, or 120mmH₂O/60mm or more, and the suction resistance of the first filter segment 111 or the second filter segment 112 may be 150mmH₂O/60mm or less, 140mmH₂O/60mm or less, 130mmH₂O/60mm or less, 120mmH₂O/60mm or less, 110mmH₂O/ 60mm or less, 100mmH₂O/60mm or less, 90mmH₂O/60mm or less, 80mmH₂O/60mm or less, or 70mmH₂O/60mm or less. Within such a numerical range, appropriate suckability may be ensured. In addition, the probability of occurrence of a vortex flow in the cavity segment 113 is increased by the appropriate suckability, and accordingly, an effect of uniformly heating a plurality of tobacco granules may be achieved. In addition, when the first filter segment 111 and the second filter segment 113 are paper filters, an appropriate amount of atomization may be guaranteed within the above numerical range.

In an embodiment of the present invention, each of the first filter segment 111 and the second filter segment 112 may include a paper material.

In an embodiment of the present invention, the first filter segment 111 may include a paper material. In other words, the first filter segment 211 may be formed of a paper filter. The paper material may be preferably arranged in the longitudinal direction in order to smoothly secure an airflow path, but is not limited thereto. The paper material is hardly denatured by heat, and may thus be more easily applied to a tobacco rod portion than cellulose acetate fiber that melts or shrinks when heated to a predetermined temperature or higher.

In an embodiment of the present invention, the first filter segment 111 may include a water-resistant or oil-resistant paper material. When the first filter segment 111 includes the water-resistant or oil-resistant paper material, a problem that smoke components (e.g., moisture and an aerosol forming agent component) included in the aerosol is absorbed while passing through the first filter segment 111, such that a visible amount of atomization is decreased (e.g., a problem that an amount of atomization is decreased in the smoky mode) may be significantly reduced. For example, when the first filter segment 111 includes a general paper material, the above-described smoke components are absorbed due to hygroscopicity of the paper material, such that a visible amount of atomization may be decreased, but when the water-resistant or oil-resistant paper material described above is applied, the absorption of the smoke components described above hardly occurs, such that a problem that the amount of atomization is decreased may be solved.

In an embodiment of the present invention, the first filter segment 111 may be formed of a cellulose acetate filter. In this case, an improvement effect of removal ability of the first filter segment 111 may be achieved.

In an embodiment of the present invention, the second filter segment 112 may include a paper material. In other words, the second filter segment 112 may be formed of a paper filter. The paper material may be preferably arranged in the longitudinal direction in order to smoothly secure an airflow path, but is not limited thereto. The paper material is a material robust against heat, and may significantly alleviate a problem that a fall-off phenomenon of tobacco granules is accelerated due to a phenomenon in which a cellulose acetate fiber is in contact with an internal heating element to melt or shrink when the cellulose acetate fiber is used.

In an embodiment of the present invention, the second filter segment 112 may include a water-resistant or oil-resistant paper material, and as described above in the description of the first filter segment 111, the water-resistant or oil-resistant paper material may significantly reduce a problem that a visible amount of atomization is decreased.

In an embodiment of the present invention, as illustrated in FIG. 2, the tobacco rod 11 includes the cavity segment 113 formed by the first filter segment 111 and the second filter segment 112. The cavity segment 113 is a segment including a cavity, and may be located between the first filter segment 111 and the second filter segment 112. That is, the cavity segment 113 may be formed by the first filter segment 111 and the second filter segment 112.

The cavity segment 113 may be manufactured in various manners. For example, the cavity segment 113 may be manufactured in a form including a tubular structure such as a paper tube or may be manufactured by wrapping a cavity formed by two filter segments with a wrapper made of an appropriate material, but a method of manufacturing the cavity segment 212 is not particularly limited thereto as long as the cavity segment 113 is filled with the tobacco granules.

As illustrated in FIG. 2, in an embodiment of the present invention, the cavity segment 113 may be filled with the tobacco granules. In general, the tobacco granules have significantly less contents of moisture and/or aerosol forming agent content than other types of tobacco substances (e.g., leaf tobacco cut filler, planar leaf, etc.), and thus may significantly decrease generation of visible smoke generation, and accordingly, a smokeless function of the aerosol generating apparatus 2 may be easily implemented. However, a diameter, a density, a filling rate, a composition ratio of constituent materials, a heating temperature, and the like, of the tobacco granules may be various, and may change according to embodiments.

In an embodiment of the present invention, the diameter of tobacco granules may be about 0.4mm to 1.2mm. Within such a numerical range, proper hardness and the manufacturing easiness of the tobacco granules 113 may be ensured, and the probability of occurrence of a vortex flow in the cavity segment 113 may be increased.

In an embodiment of the present invention, a size of the tobacco granules may be about 15 meshes to 50 meshes, and preferably about 20 meshes to 40 meshes. Within such a numerical range, proper hardness and the manufacturing easiness of the tobacco granules 113 may be ensured, the fall-off phenomenon is minimized, and the probability of occurrence of a vortex flow in the cavity segment 113 may be increased.

In an embodiment of the present invention, the density of the tobacco granules may be about 0.5 g/cm³ to 1.2 g/cm³, and preferably about 0.7 g/cm³ to 1.0g/cm³. Within such a numerical range, proper hardness of the tobacco granules 113 may be ensured, and the probability of occurrence of a vortex flow in the cavity segment 113 may be increased.

In an embodiment of the present invention, the hardness of the tobacco granules may be about 80% or more, preferably 85% or 90% or more, and more preferably 91%, 93%, 95%, or 97% or more. Within such a numerical range, the manufacturing easiness of the tobacco granules may be improved, and a crumbling phenomenon of the tobacco granules may be minimized, such that the manufacturing easiness of the aerosol generating article 1 may also be improved. In an embodiment of the present invention, the hardness of the tobacco granules may be a numerical value measured in accordance with the national standard test method KSM-1802 ("Activated carbon test method"). For details of a hardness measurement method and the meaning of the measured values, the national standard KSM-1802 is referred to.

In an embodiment of the present invention, the heating temperature of the tobacco granules may be about 260°, 250°, 240°, or 230° or less. In other words, the heating element may heat the tobacco rod 11 to the heating temperature in the illustrated range. Within the above numerical range, the problem that the tobacco granules are excessively heated to produce a burnt taste may be solved. In addition, the smokeless function of the aerosol generating apparatus 2 may be easily implemented by ensuring the proper smoking flavor and minimizing the visible smoke at the same time. To explain further, the tobacco substances such as cut filler and planar leaf should be heated to about 270° or higher to develop sufficient smoking flavor, whereas the tobacco granules may express sufficient smoking flavor even at a lower temperature, thereby easily suppressing the visible smoke from being generated. In addition, due to these characteristics, the tobacco granules may be suitable to implement the smokeless function of the aerosol generating apparatus 2 compared to other types of tobacco substances.

In an embodiment of the present invention, a content of nicotine on a wet basis in the tobacco granules may be about 1.0% to 4.0%, and preferably about 1.5% to 3.5%, 1.8% to 3.0%, or 2.0% to 2.5%. Within such a numerical range, an appropriate level of smoking flavor may be ensured.

In an embodiment of the present invention, a content of nicotine on a dry basis in the tobacco granules may be about 1.2% to 4.2%, and preferably about 1.7% to 3.7%, 2.0% to 3.2%, or 2.2% to 2.7%. Within such a numerical range, an appropriate level of smoking flavor may be ensured.

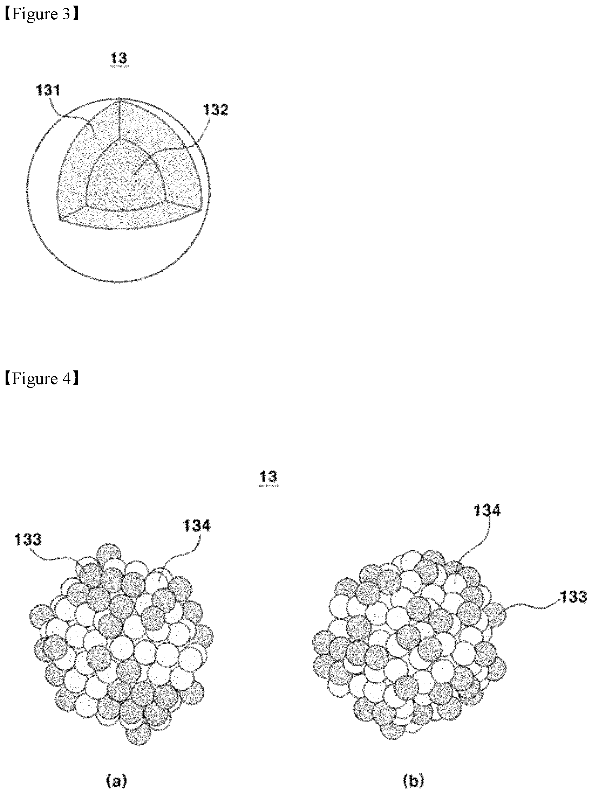

In an embodiment of the present invention, as illustrated in FIGS. 3 and 4, the tobacco granules 13 includes the tobacco fine particles; and the susceptor fine particles heated by a variable magnetic field therein.

The term "fine particles" used in the present invention may be particles having a particle diameter of about 40 µm or less, preferably 20 µm to 30 µm. The fine particles are introduced to more specifically describe the tobacco or susceptor constituting the tobacco granules from the viewpoint of the manufacturing method, and the fine particles may grow in size by aggregation, for example, in a layering method, etc. In some cases, the boundary of each fine particle may not be distinguished. Therefore, in the present invention, the fine particles may be omitted and described when the size of the particles is not described. The tobacco fine particles may be pulverized tobacco components such as general tobacco leaves to the above-described size.

In an embodiment of the present invention, as illustrated in FIGS. 3 and 4, the tobacco granules 13 includes the susceptor heated by a variable magnetic field therein. The susceptor is a particulate material, and may heat tobacco granules through induction heating by a heating element of the aerosol generating apparatus, specifically through a heating method by the variable magnetic field. For example, the aerosol generating apparatus 2 may be configured to include an induction coil 23 for induction heating a susceptor material, and for this purpose, a plurality of susceptors may be arranged inside the tobacco granules 13 included in the cavity segment 113. It may be preferable that the susceptors widen a contact surface with the tobacco fine particles and are arranged so that each susceptor separately generates heat to uniformly heat the entire granules.

The variable magnetic field generated by the induction coil 23 may heat the susceptor. For example, the tobacco granules 13 may be heated to a temperature of 260 ° C or less, preferably 220 to 240°C by the susceptor.

In an embodiment of the present invention, the susceptor may include one selected from the group consisting of aluminum, gold, iron, nickel, cobalt, conductive carbon, graphite, mild steel, stainless steel, copper, bronze, and a combination thereof. The susceptors each include a specific material, and thus may not have a Curie temperature or may have a specific Curie temperature. In this specification, the Curie temperature means a temperature at which a certain material loses magnetism, and the Curie temperature may be different depending on the type of materials.

In an embodiment of the present invention, the susceptor fine particles may have a diameter of about 40 µm or less, preferably 20 µm to 30 µm, but is not particularly limited thereto. The susceptor fine particles may be aggregated to form secondary particles of various sizes and shapes.

In an embodiment of the present invention, as illustrated in FIG. 3, the tobacco granule 13 may be in a form of a core-shell in which the susceptor fine particles 132 are aggregated and located in a core which is an inner center thereof and the tobacco fine particles 131 are aggregated and located in a form of a shell surrounding the core made of the susceptor. When the center-to-center distance from any susceptor 132 located in the core to any tobacco fine particles 131 located in the shell is within a certain distance, the tobacco fine particles 131 are distributed in the shell area, and thus, uniformly heated without the carbonization phenomenon. Illustratively, the diameter ratio of the tobacco granules and the core may be 1.5: 1 to 2: 1, but is not necessarily limited thereto.

In an embodiment of the present invention, as illustrated in FIGS. 4A and 4B, the tobacco granules 13 may have the form in which the tobacco fine particles 133 and the susceptors 134 are randomly mixed. In an embodiment of the present invention, the susceptors 134 may be mixed with the tobacco fine particles 133 in the form of the fine particles. Specifically, the tobacco substance and the susceptors may be prepared in the form of the fine particles, and then mixed to prepare the tobacco granules 13. In this case, the particle diameters of the tobacco fine particles 133 and the susceptors 134 in the form of the fine particles may be 40 µm or less, preferably 20 µm to 30 µm, respectively. When the particle size of the fine particles in the above range is satisfied, it is easy to uniformly mix the tobacco fine particles 133 and the susceptors 134 in the form of the fine particles, and as a result, when the susceptors 134 separately generate heat inside the tobacco granules 13, the susceptors 134 may uniformly heat the entire tobacco fine particles 133 included in the tobacco granules 13, thereby preventing the carbonization phenomenon from occurring.

In an embodiment of the present invention, the tobacco granules 13 may further include moisture. Even if the moisture is reduced through the drying process in the manufacturing process of the tobacco granules 13, it may be the remaining moisture. In an embodiment of the present invention, the tobacco granules 13 may contain 5 to 15 wt% of moisture, preferably 5.5 to 12 wt% of moisture, and more preferably 6 to 9 wt% of moisture based on the total weight of tobacco granules. Within such a numerical range, the generation of visible smoke may be significantly decreased, and a smokeless function of the aerosol generating apparatus 2 may be easily implemented.

In an embodiment of the present invention, the tobacco granules 13 may contain 50 to 70 wt% of tobacco fine particles, preferably 53 to 67 wt% of tobacco fine particles, and more preferably 57 to 63 wt% of tobacco fine particles based on the total weight of tobacco granules. When the tobacco granules 13 include the tobacco fine particles in the above range, the durability of the tobacco taste, the hardness of the tobacco granules, and the easiness of manufacturing the granules can be secured.

In an embodiment of the present invention, the tobacco granules 13 may contain 20 to 40 wt% of susceptor fine particles, preferably 23 to 37 wt% of susceptor fine particles, and more preferably 27 to 33 wt% of susceptor fine particles based on the total weight of tobacco granules. Within the above range, the weight ratio of the susceptor fine particles may vary depending on the type of tobacco fine particles included in the tobacco granules 13, the diameter and size of the tobacco granules, which may vary depending on the embodiment.

In an embodiment of the present invention, the tobacco granules 13 may include 1 to 10 wt% of aerosol forming agent, preferably 7 wt%, 5 wt%, 3 wt%, or 1 wt% of aerosol forming agent. Alternatively, the tobacco granules 13 may not include the aerosol forming agent. Within such a numerical range, the generation of visible smoke may be significantly decreased, and a smokeless function of the aerosol generating apparatus 2 may be easily implemented.

In an embodiment of the present invention, the cavity segment 113 may include a composite granule structure in which two or more of the tobacco granules 13 are aggregated. The composite granule structure may be a structure formed by aggregating two or more tobacco granules 13 including a susceptor therein. For example, the tobacco granules 13 including the susceptor therein may be a structure formed by aggregating two, three, or four or more. In addition to the case where the tobacco granules 13 exist independently in the cavity segment 113, the composite granule structure formed by aggregating at least two or more separate tobacco granules 13 may exist in the cavity segment 113. The composite granule structure is able to transfer heat not only from the susceptor included inside the tobacco granules 13 but also from the susceptors of the adjacent aggregated tobacco granules 13, so the total amount of heat supplied by the tobacco fine particles from the susceptor may increase, thereby facilitating the uniform heat transfer.

In an embodiment of the present invention, the composite granule structure may be a single-layer structure in which the tobacco granules 13 are aggregated in a single-layer form; or a multi-layer structure in which two or more layers are layered. For example, the single-layer structure formed by horizontally aggregating tobacco granules 13 in a single-layer form may be formed. Alternatively, the multi-layer structure formed by aggregating separate tobacco granules 13 in the vertical direction of the single-layer structure may be formed. Through the single-layer structure or the multi-layer structure, the heat transfer is also possible from the susceptor of the neighboring agglomerated tobacco granules 13, so the total amount of heat supplied from the susceptor to the tobacco fine particles may be increased, thereby facilitating the uniform heat transfer.

In one embodiment of the present invention, as illustrated in FIG. 2, the aerosol generating article 1 is the aerosol generating article 1 used together with the aerosol generating apparatus 2, and includes the tobacco rod 11; and a filter rod 12 located downstream of the tobacco rod 11, in which the filter rod 12 includes a cooling segment 121; and a mouthpiece segment 122 located downstream of the cooling segment 121.

Description of the tobacco rod 11 is as described above in this specification.

In an embodiment of the present invention, as illustrated in FIG. 2, the aerosol generating article 1 includes a filter rod 12 located downstream of the tobacco rod 11. The filter rod 12 may be located downstream of the tobacco rod 11 to perform a filtering function for the aerosol. To this end, the filter rod 12 may include a filter material such as paper or a cellulose acetate fiber. The filter rod 12 may further include a wrapper wrapping the filter material.

The filter rod 12 may be manufactured in various shapes. For example, the filter rod 12 may be a cylindrical rod or a tubular rod including a hollow therein. In addition, the filter rod 12 may be a recessed rod. If the filter rod 12 is composed of a plurality of segments, at least one of the plurality of segments may be manufactured in a different shape. In addition, the filter rod 12 may be manufactured to generate flavor. For example, a flavoring solution may be sprayed into the filter rod 12 or a separate fiber to which a flavoring solution is applied may be inserted into the filter rod. As another example, the filter rod 12 may include at least one capsule (not illustrated) containing a flavoring solution.

In an embodiment of the present invention, the filter rod 12 may be composed of a plurality of segments. For example, the filter rod 12 may include a cooling segment 121 performing a cooling function for an aerosol and a mouthpiece segment 122 performing a filtering function for an aerosol. In addition, the filter rod 12 may further include at least one segment performing other functions.

Specifically, the cooling segment 121 may be manufactured in various forms. For example, the cooling segment 121 may be manufactured in forms such as a paper tube, a cellulose acetate filter in which a hollow is formed, a cellulose acetate filter in which a plurality of holes are formed, and a filter filled with a polymer material or a biodegradable polymer material, but is not limited thereto if it may perform an aerosol cooling function. The mouthpiece segment 122 may be, for example, a cellulose acetate filter (i.e., a filter made of a cellulose acetate fiber), but is not limited thereto.

In an embodiment of the present invention, the aerosol generating article 1 may be wrapped by at least one wrapper. For example, the aerosol generating article 1 may be wrapped with one wrapper or overlapped with two or more wrappers. For example, the tobacco rod may be wrapped by a first wrapper and the filter rod may be wrapped by a second wrapper. In addition, the tobacco rod and the filter rod wrapped by individual wrappers may be coupled to each other, and the entire aerosol generating article may be rewrapped by a third wrapper. If each of the tobacco rod 11 or the filter rod 12 is composed of a plurality of segments, each segment may be wrapped by an individual wrapper. In addition, the entire aerosol generating article in which segments wrapped by individual wrappers are coupled to each other may be rewrapped by another wrapper. At least one hole through which external air is introduced or internal gas is discharged may be formed in the wrapper.

In an embodiment of the present invention, as illustrated in FIG. 1, the aerosol generating apparatus 2 includes the aerosol generating article 1; an accommodation space of the aerosol generating article 1; battery 21; and a coil 23, in which the coil 23 surrounds the cavity segment 113 and receives power from the battery 21 to generate a variable magnetic field to heat the susceptor.

Description of the aerosol generating article 1 is as described above in this specification.

In an embodiment of the present invention, as illustrated in FIG. 1, the aerosol generating apparatus 2 includes the accommodation space of the aerosol generating article 1. Specifically, the housing may form an appearance of the aerosol generating apparatus 2 and may include the accommodation space of the aerosol generating article 1 inside the housing. The aerosol generating article 1 may be inserted into the accommodation space along the longitudinal direction, and may be easily removed by a user after the use is completed.

In one embodiment of the present invention, as illustrated in FIG. 1, the aerosol generating apparatus 2 includes the battery 21. The battery 21 supplies power used for the operation of the aerosol generating apparatus 2. For example, the battery 21 may supply power so that the heating element may heat the aerosol generating article 1, and may supply power required for the control unit 22 to operate. In addition, when the aerosol generating apparatus 2 includes electrical components such as a display, a sensor, and a motor, the battery 21 may supply power required to operate the aerosol generating apparatus 2.

In one embodiment of the present invention, as illustrated in FIG. 1, the aerosol generating apparatus may a control unit 22. The control unit 22 may control the overall operation of the aerosol generating apparatus 2. For example, the control unit 22 may control the heating temperature of the heating element and the power supplied by the battery 21, and may confirm the state of each component to determine whether the aerosol generating apparatus 2 is in an operable state. In addition, the control unit 22 may be implemented by at least one processor. The control unit 22 may be implemented as an array of a plurality of logic gates or may be implemented as a combination of a general-purpose microcontroller and a memory in which a program executable in the microcontroller is stored. In addition, it may be clearly understood by those skilled in the art to which the present disclosure pertains that the control unit may be implemented as other types of hardware.

In an embodiment of the present invention, as illustrated in FIG. 1, the aerosol generating apparatus 2 includes the coil 23, in which the coil 23 surrounds the cavity segment 113 and receives power from the battery 21 to generate a variable magnetic field to heat the susceptor. Specifically, the coil 23 may be an induction coil for heating by an induction heating method, and the susceptor induction heated by the coil 23 may be included in the tobacco granules 13 included in the cavity segment 113 of the aerosol generating article 1.

In an embodiment of the present invention, as illustrated in FIG. 1, the coil 23 may be arranged to heat only the cavity segment 113. For example, the coil 23 may be disposed in a form surrounding only the cavity segment 113. As a result, when the filter segment is heated, the problem of melting or shrinking the fiber due to heat in the case of a cellulose acetate filter and the paper filter and the problem of reducing the amount of visible atomization due to the increase in hygroscopicity of a paper material by heat in the case of a paper filter may be prevented. In addition, deformation and release of an adhesive included in the filter may be reduced, a change in physical properties of the filter may be prevented.

In an embodiment of the present invention, the aerosol generating apparatus 2 may further include a cartridge including a liquid aerosol forming substrate. For example, the heating element connected to the cartridge may heat the liquid aerosol forming substrate by means of a liquid delivery means to form an aerosol, which may pass through the aerosol generating article 1 and be delivered to a user.

In an embodiment of the present invention, the aerosol generating apparatus 2 may operate in a smokeless mode or a smoky mode. Specifically, the aerosol generating apparatus 2 operates in a mode set by the user among the smokeless mode and the smoky mode. In the smokeless mode, an aerosol is generated, but mist that may be confirmed with the naked eye is not generated, and in the smoky mode, it is possible to generate a mist that can be confirmed with the naked eye along with nicotine transfer according to the user's preference.

As described above, according to the tobacco rod, the aerosol generating article including the same, and the aerosol generating apparatus used together according to the present invention, by applying the non-contact heating method that includes the susceptor in the specific form inside the tobacco granules included in the cavity segment, it is possible to uniformly heat the tobacco granules while preventing the carbonization phenomenon, thereby providing a smoker with satisfaction through the expression of the unique taste of tobacco.

Although the present invention has been described in relation to the above-described embodiments, various modifications and alterations may be made without departing from the spirit and scope of the present invention. Accordingly, these modifications and alterations fall within the scope of the claims as long as they belong to the spirit of the present invention.

### [Detailed Description of Main Elements]

1: Aerosol generating article
11: Tobacco rod
12: Filter rod
13: Tobacco granules
111: First filter segment
112: Second filter segment
113: Cavity segment
121: Cooling segment
122: Mouthpiece segment
131: Tobacco located at shell in tobacco granule
132: Susceptor located at core in tobacco granule
133: Tobacco fine particle randomly mixed in tobacco granule
134: Susceptor fine particle randomly mixed in tobacco granule
2: Aerosol generating apparatus
21: Battery
22: Control unit
23: Coil

## Claims

1. A tobacco rod, comprising:
a first filter segment;
a second filter segment that is located upstream of the first filter segment; and
a cavity segment that is formed by the first filter segment and the second filter segment,
wherein the cavity segment is filled with a tobacco granule, and
the tobacco granule includes tobacco fine particles, and susceptor fine particles heated by a variable magnetic field therein.

2. The tobacco rod of claim 1, wherein the tobacco granule is in a form of a core-shell in which the susceptor fine particles are aggregated and located in a core which is an inner center thereof and the tobacco fine particles are aggregated and located in a form of a shell surrounding the core.

3. The tobacco rod of claim 1, wherein the tobacco granule has a form in which the tobacco fine particles and the susceptor fine particles are randomly mixed and aggregated.

4. The tobacco rod of claim 1, wherein the tobacco granule further comprises moisture.

5. The tobacco rod of claim 4, wherein the tobacco granule comprises: based on the total weight of the tobacco granules,
50 to 70 wt% of tobacco fine particles;
20 to 40 wt% of susceptor fine particles; and
5 to 15 wt% of moisture.

6. The tobacco rod of claim 1, wherein the cavity segment includes a composite granule structure in which two or more tobacco granules are aggregated.

7. The tobacco rod of claim 6, wherein the composite granule structure is a single-layer structure in which the tobacco granules are aggregated in a single-layer form; or a multi-layer structure in which two or more layers are laminated.

8. The tobacco rod of claim 1, wherein each of the first filter segment and the second filter segment comprises a paper material.

9. The tobacco rod of claim 1, wherein the susceptor fine particles comprises one selected from the group consisting of aluminum, gold, iron, nickel, cobalt, conductive carbon, graphite, mild steel, stainless steel, copper, bronze, and a combination thereof.

10. An aerosol generating article used with an aerosol generating apparatus, comprising:
the tobacco rod of any one of claims 1 to 9; and
a filter rod that is located downstream of the tobacco rod,
wherein the filter rod includes a cooling segment; and a mouthpiece segment that is located downstream of the cooling segment.

11. An aerosol generating apparatus, comprising:
the aerosol generating article of claim 10;
an accommodation space for the aerosol generating article;
a battery; and
a coil,
wherein the coil surrounds the cavity segment and generates a variable magnetic field by receiving power from the battery to heat the susceptor.
